(19) Europäisches Patentamt
European Patent Office
Office européen des brevets

(11) Veröffentlichungsnummer: **0 319 794 B1**

(12) **EUROPÄISCHE PATENTSCHRIFT**

(45) Veröffentlichungstag der Patentschrift: **01.09.93**

(51) Int. Cl.$^5$: **C08G 77/62**, C04B 35/00

(21) Anmeldenummer: **88119656.2**

(22) Anmeldetag: **25.11.88**

# (54) Polysilazane, Verfahren zu ihrer Herstellung und Verfahren zur Herstellung von Siliziumnitrid enthaltenden keramischen Materiallen.

(30) Priorität: **04.12.87 DE 3741059**

(43) Veröffentlichungstag der Anmeldung:
**14.06.89 Patentblatt 89/24**

(45) Bekanntmachung des Hinweises auf die Patenterteilung:
**01.09.93 Patentblatt 93/35**

(84) Benannte Vertragsstaaten:
**BE CH DE FR GB IT LI NL**

(56) Entgegenhaltungen:
**US-A- 2 579 418**
**US-A- 4 404 153**
**US-A- 4 595 775**

(73) Patentinhaber: **HOECHST AKTIENGESELLSCHAFT**

**D-65926 Frankfurt(DE)**

(72) Erfinder: **Vaahs, Tilo, Dr.**
**Am Flachsland 54**
**D-6233 Kelkheim (Taunus)(DE)**
Erfinder: **Kleiner, Hans-Jerg, Dr.**
**Altkönigstrasse 11a**
**D-6242 Kronberg/Taunus(DE)**
Erfinder: **Peuckert, Marcellus, Dr.**
**Platanenweg 8**
**D-6238 Hofheim am Taunus(DE)**
Erfinder: **Brück, Martin**
**Haneckstrassse 17**
**D-6238 Hofheim am Taunus(DE)**

EP 0 319 794 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Polysilazane, ihre Herstellung, ihre Weiterverarbeitung zu Siliziumnitrid enthaltendem keramischen Material, sowie dieses Material selbst. Das Siliziumnitrid enthaltende keramische Material wird durch Pyrolyse aus den Polysilazanen erhalten und besteht zum größten Teil aus Siliziumnitrid, welches Anteile an Siliziumkarbid und Kohlenstoff enthält.

Die Pyrolyse von Polysilazanen zu Siliziumnitrid-SiC-haltigem keramischen Material wurde bereits in der Literatur (R.R. Wills et al., Ceramic Bulletin, Vol. 62 (1983), 904-915) beschrieben.

Zur Herstellung von Polysilazanen werden in der Regel Chlorsilane als Ausgangsmaterialien eingesetzt und diese mit Ammoniak, primären oder sekundären Aminen oder mit Disilazanen umgesetzt (US-PS 4540803, US-PS 4 543 344, US-PS 4 535 007, US-PS 4 595 775, US-PS 4 397 828, US-PS 4 482 669).

Eine weitere Methode zur Herstellung von Polysilazanen besteht in einer Umsetzung von Aminosilanen mit überschüssigem Ammoniak oder überschüssigem primären Amin. Die Aminosilane werden ihrerseits durch Umsetzung von Chlorsilanen mit Aminen hergestellt (FR-A1-2583423). Beispielsweise entsteht aus Tetrachlorsilan $SiCl_4$ und Methylamin das Tetrakis(methylamino)silan $Si(NHCH_3)_4$:

$$SiCl_4 + 8\ CH_3NH_2 = Si(NHCH_3)_4 + 4\ CH_3NH_3Cl$$

Das Aminosilan wird anschließend mit überschüssigem Ammoniak umgesetzt, wobei alle Methylaminogruppen durch NH-Gruppen ersetzt werden. Es entstehen viskose bis hochviskose Polysilazane, die mit einer keramischen Ausbeute von 72-79 Gew.-% zu Siliziumnitrid enthaltendem Material pyrolysiert werden können.

Der Nachteil dieses Verfahrens besteht in der Verwendung großer Mengen Alkylamin, welches dann zur Hälfte bei der Herstellung des Aminosilans als Alkylaminhydrochlorid wieder ausfällt. Die aus dem Aminosilan hergestellten Polymeren sind viskos und deshalb nur schwer zu verarbeiten; eine Faserherstellung ist nicht möglich. Es bestand daher die Aufgabe, ein einfaches Verfahren zu finden, welches zu festen Polysilazanen führt, die in gängigen Lösungsmitteln löslich sind und/oder schmelzbar sind und daher aus einer Lösung und/oder der Schmelze versponnen werden können. Die vorliegende Erfindung löst diese Aufgabe.

Aus US-A-2 579 418 ist es bekannt, Trichlorsilan mit Ammoniak oder einem Amin zu einem Polysilazan umzusetzen, welches N-H oder N-R Gruppen enthält. Es wurdenun gefunden, daß man schmelzbare und lösliche Polysilazane herstellen kann, die beide Gruppen enthalten, wenn man bestimmte Disilazane mit Ammoniak umsetzt.

Ein Gegenstand der vorliegenden Erfindung ist ein Verfahren zur Herstellung von polymeren Silazanen, dadurch gekennzeichnet, daß man ein oder mehrere Si,Si'-Diorganyl-N-alkyl-tetrachlor-disilazane der Formel $RSiCl_2\text{-}NR'\text{-}SiCl_2R$, worin R = $C_1$-$C_4$-Alkyl, Vinyl oder Phenyl und R' = $C_1$-$C_4$-Alkyl ist, mit mindestens 6,7 Mol Ammoniak pro Mol Chlordisilazan in einem Lösungsmittel bei Temperaturen von -80 °C bis +70 °C umsetzt. Vorzugsweise ist R = Methyl, Ethyl, Vinyl oder Phenyl und R' = Methyl. Insbesondere ist R = Ethyl und R' = Methyl.

Die als Ausgangsprodukte für die polymeren Silazane eingesetzten Si,Si'-Diorganyl-N-alkyl-tetrachlordisilazane $RSiCl_2\text{-}NR'\text{-}SiCl_2R$ (im folgenden auch als "Chlordisilazane" bezeichnet) sind für R = R' = Methyl bekannt aus folgenden Veröffentlichungen

J. Silbiger et al., Inorg. Chem. 6 (1967) 399;
H. Nöth et al., Chem. Ber. 107 (1974) 518).
J.P. Mooser et al., Z. Naturforschung 29b (1974) 166.

Die für das erfindungsgemäße Verfahren benötigten Chlordisilazane können nach folgender Methode erhalten werden:

Ein oder mehrere Organyltrichlorsilane $RSiCl_3$, wobei R für Alkylgruppen mit 1 bis 4 C-Atomen, für Vinyl oder Phenyl steht, werden mit Monoalkylamin $R'NH_2$ umgesetzt, wobei R' für Alkylgruppen mit 1 bis 4 C-Atomen steht. Die Umsetzung wird in aprotischen Lösungsmitteln, vorzugsweise polaren wie Ethern, insbesondere in THF durchgeführt. Die Temperatur beträgt dabei -10° bis +70°C.

Das Molverhältnis von Organyltrichlorsilan zu Alkylamin sollte Werte zwischen 0,3:1 und 1:1annehmen, bevorzugt wird ein Molverhältnis von 0,5:1 bis 0.7:1. Die Reaktionsgleichung lautet:

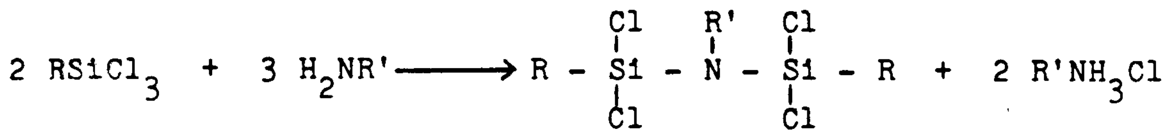

Die bei der Reaktion entstehenden Ammoniumsalze fallen aus der Reaktionslösung aus, während die gebildeten Chlordisilazane in Lösung bleiben.

Die Chlordisilazane werden erfindungsgemäß pro Mol mit mindestens 6,7 Mol, vorzugsweise mit mindestens 7 Mol Ammoniak in aprotischen Lösungsmitteln, vorzugsweise polaren wie Ethern, insbesondere THF umgesetzt.

Dies geschieht bei Temperaturen zwischen -80 °C und +70 °C, bevorzugt bei -10 °C bis 0 °C.

Dabei reagiert ein Ammoniakmolekül zunächst mit zwei SiCl-Funktionen unter Ausbildung einer NH-Brücke:

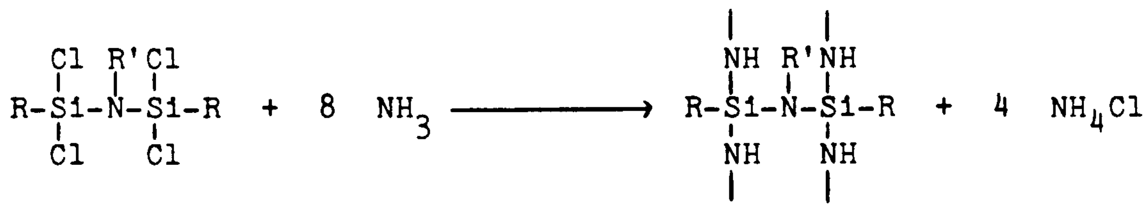

Damit wird schon die maximale Vernetzung erreicht, denn die Alkylaminobrücke ist wie eine NH-Gruppierung an zwei weitere Siliciumatome gebunden. Anschließend tritt ein teilweiser Ersatz der NR′-Gruppen durch NH-Gruppen ein. Dadurch nimmt der Kohlenstoffgehalt des Polymeren ab, was im Hinblick auf die Herstellung von $Si_3N_4$-Keramik erwünscht ist:

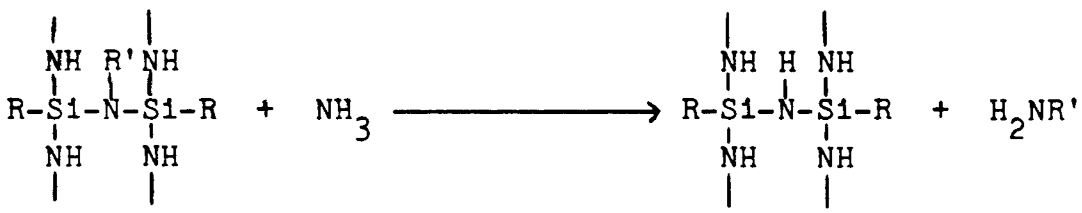

Jedoch werden, wie gesagt, nicht alle Alkylaminobrücken verdrängt, es bleiben NR′-Gruppierungen im Polysilazan zurück. Die entstehenden neuartigen polymeren Silazane lösen sich vollständig in allen gängigen aprotischen Lösungsmitteln. Sie besitzen folgende Struktureinheiten:

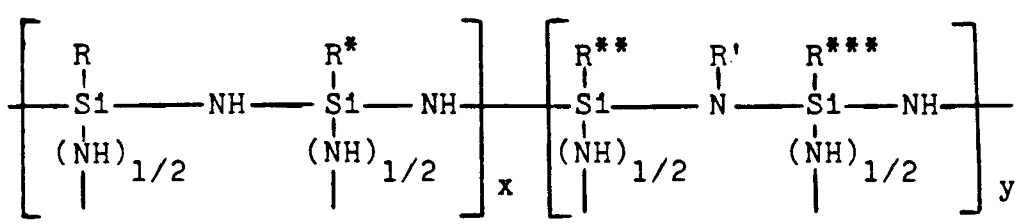

mit x + y = 1. Dabei kommen für R*, R**, R*** zwar dieselben Reste in Frage wie für R, aber R, R*, R**, R*** können gleich oder verschieden sein (verschieden, wenn eine Mischung mehrerer Chlordisilazane mit Ammoniak umgesetzt wird).

Die Siliziumatome sind hier immer über NH- oder NR′-Brücken mit anderen Siliziumatomen verbunden, direkte Si-Si-Bindungen werden nicht gebildet.

Man erhält Werte von x = 0,7-0,95 (y = 0,3 - 0,05), wenn man mindestens 6,7 Mol $NH_3$ pro Mol Chlordisilazan verwendet. Vorzugsweise ist x = 0,85 - 0,95 (y = 0,15 - 0,05); dies ist dann der Fall, wenn man mindestens 7 Mol $NH_3$ pro Mol Chlordisilazan verwendet. Im allgemeinen verwendet man höchstens

16 Mol, vorzugsweise höchstens 12 Mol $NH_3$ pro Mol Chlordisilazan. Natürlich führt auch eine größere relative Menge $NH_3$ als 16 Mol zum Erfolg, aber dieser höhere Aufwand ist überflüssig.

Ein weiterer Gegenstand der vorliegenden Erfindung sind demgemäß polymere Silazane der allgemeinen Formel

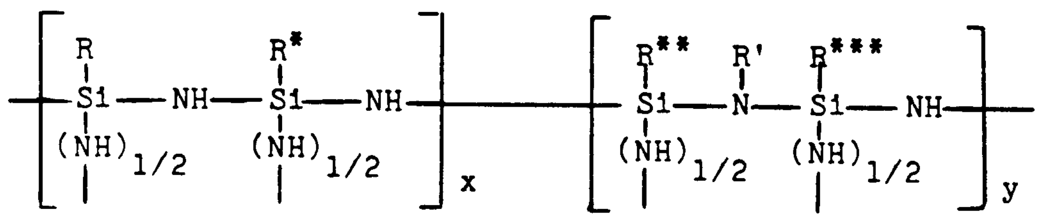

worin R, R*, R** und R*** gleich oder verschieden sein können und R, R*, R**, R*** = $C_1$-$C_4$-Alkyl, Vinyl oder Phenyl und R′ = $C_1$-$C_4$-Alkyl ist und x, y die Molfraktionen der beiden Struktureinheiten bedeuten, wobei x+y = 1 und x = 0,7 - 0,95 ist. Dabei ist wieder vorzugsweise R, R*, R**, R*** = Methyl, Ethyl, Vinyl oder Phenyl und R′ = Methyl; besonders bevorzugt ist R, R*, R**, R*** = Ethyl und R′ = Methyl.

Ein weiterer Gegenstand der vorliegenden Erfindung sind polymere Silazane, dadurch erhältlich, daß man ein oder mehrere Si,Si′-Diorganyl-N-alkyl-tetrachlor-disilazane der Formel $RSiCl_2$-NR′-$SiCl_2R$, worin R = $C_1$-$C_4$-Alkyl, Vinyl oder Phenyl und R′ = $C_1$-$C_4$-Alkyl ist, mit mindestens 6,7 Mol Ammoniak pro Mol Chlordisilazan in einem Lösungsmittel bei Temperaturen von -80 °C bis +70 °C umsetzt.

Die Strukturformel der erfindungsgemäßen polymeren Silazane zeigt, daß ihr relativer Gehalt an Stickstoff zwangsläufig hoch ist: das Verhältnis von Silizium zu Stickstoff besitzt Werte zwischen 1:1,3 und 1:2. In $Si_3N_4$ beträgt dieses Verhältnis 1:1,33, so daß sich durch Abspaltung von Ammoniak bei der Pyrolyse der Polysilazane das für die Siliziumnitridkeramik richtige Verhältnis von Silizium und Stickstoff leicht einstellen kann.

Dadurch wird verhindert, daß sich bei der Pyrolyse elementares Silizium bildet. Dies ist eine große Schwierigkeit bei dem von D. Seyferth, G.H. Wiseman und C. Prud'homme (US-PS 4 397 828, J. Amer. Ceram. Soc. 66, (1983) C 13) beschriebenen Verfahren, welches ausgehend von Dichlorsilan $H_2SiCl_2$ und Ammoniak zu einem Polysilazan mit einem Verhältnis Si:N = 1:1 führt. Bei der Pyrolyse derartiger Polysilazane entstehen α- und β-$Si_3N_4$, und der Überschuß an Silizium im Polysilazan erscheint als elementares Silizium in der Keramik.

Die erfindungsgemäßen stickstoffreichen Polysilazane können durch Pyrolyse zu amorphen, dichten Materialien umgewandelt werden, die Siliziumnitrid enthalten und in Spuren auch H und O enthalten können.

Ein weiterer Gegenstand der vorliegenden Erfindung ist daher ein Verfahren zur Herstellung von Siliziumnitrid enthaltendem keramischem Material, dadurch gekennzeichnet, daß man die oben durch ihre Strukturformel oder durch das Verfahren zu ihrer Herstellung definierten polymeren Silazane in inerter Atmosphäre bei 800 bis 1400 °C pyrolysiert. Die inerte Atmosphäre kann dabei aus $N_2$, Ar oder He bestehen, vorzugsweise nimmt man $N_2$ oder Ar.

Bei Pyrolysetemperaturen oberhalb 1200 °C, etwa im Bereich von 1200 °C bis 1400 °C entstehen teilamorphe, mikrokristalline keramische Werkstoffe, die als kristalline Phase α-$Si_3N_4$ enthalten.

Ein besonderer Vorteil ist, daß sich die Polysilazane vor der Pyrolyse nach verschiedenen Verfahren zu dreidimensionalen Formkörpern formen lassen. Die einfachste Methode der Formgebung ist das in Beispiel 1 beschriebene Pressen von Körpern (einachsiales oder isostatisches Pressen) vorzugsweise aus pulverisiertem Polysilazan. Andere Formgebungsverfahren wie Schlickergießen, Extrudieren etc. sind ebenfalls möglich.

Eine wichtige Methode der Formgebung ist das Ziehen von Fasern aus den Polysilazanen. Dabei lassen sich Fasern aus hochviskosen Lösungen eines Polysilazans in Lösungsmitteln wie Toluol, Tetrahydrofuran oder Hexan ziehen; im Falle beispielsweise von R, R*, R**, R*** = Ethyl, R' = Methyl und x = 0,85 bis 0,95 außer aus Lösungen auch aus viskosen Schmelzen des Polysilazans. Das Faserziehen geschieht vorteilhafterweise durch Spinndüsen von 80 bis 150 µm Durchmesser. Durch anschließendes Strecken wird die Faser verjüngt, so daß nach der Pyrolyse eine sehr feste Faser von 2 bis 20 µm, insbesondere 5-15 µm Durchmesser entsteht. Wird aus einer Lösung gesponnen, so wird die Faser nach dem Strecken zunächst in Luft oder Inertgas getrocknet dh.das Lösungsmittel wird verdampft. Wird aus der Schmelze gesponnen, wobei die Schmelztemperatur im allgemeinen z.B. bei 60 bis 150 °C liegt, so wird die vorzugsweise bei 60 bis 100 °C gezogene Faser nach dem Strecken kurze Zeit in Luft oder Ammoniak bei Raumtemperatur

weiter vernetzt dh. unschmelzbar gemacht, damit sie beim anschließenden Pyrolysieren nicht zerfällt. Die durch Pyrolyse hergestellten Fasern finden Verwendung als mechanische Verstärkungseinlagerungen in faserverstärktem Aluminium, Aluminiumlegierungen und Keramikbauteilen.

Eine weitere wichtige Verarbeitungsmöglichkeit der erfindungsgemäßen Polysilazane ist die Herstellung dichter, gut haftender, amorpher oder mikrokristalliner keramischer Beschichtungen auf Metallen, insbesondere Stählen, oder auf Keramiken wie $Al_2O_3$, $ZrO_2$, MgO, SiC oder Siliziumnitrid.

Die Beschichtung erfolgt mit Hilfe einer Lösung des Polysilazans in organischen Lösungsmitteln wie Toluol, Tetrahydrofuran, Hexan das vor der Pyrolyse vorzugsweise verdampft wird. Falls R, R*, R**, R*** = Ethyl, R' = Methyl und x = 0,85 bis 0,95 ist, so ist das Polysilazan schmelzbar, und daher kann eine Beschichtung außer mittels einer Lösung des Polysilazans auch mittels einer Schmelze durch Eintauchen des zu beschichtenden Körpers erfolgen. Die pyrolytische Umwandlung in eine amorphe bzw. mikrokristalline Schicht erfolgt im gleichen Temperaturbereich von 800 bis 1200 °C, bzw. 1200 °C bis 1400 °C, unter Inertgas wie bei dreidimensionalen Formkörpern beschrieben.

Die keramischen Beschichtungen eignen sich wegen ihrer hervorragenden Haftung, hohen Härte und Oberflächengüte besonders zur Oberflächenveredelung von mechanisch und chemisch beanspruchten Maschinenbauteilen.

Die schmelzbaren Polysilazane mit R, R*, R**, R*** = Ethyl, R' = Methyl und vorzugsweise x = 0,85-0,95 können auch geschmolzen und dann in beliebige Gießformen gegossen werden. Wegen der hohen keramischen Ausbeute von 70 bis 90 Gew.-% können diese Gußteile durch Pyrolyse mit einem sehr langsamen Temperaturaufheizprogramm zu praktisch riß- und porenfreien amorphen, mikrokristallinen oder kristallinen, keramischen Formkörpern umgewandelt werden. Auch Spritzgießen und Extrudieren ist möglich. Vor der Pyrolyse werden die Formkörper im allgemeinen mit Luft oder $NH_3$ unschmelzbar gemacht. Die Pyrolyse wird z.B. bei 800 bis 1400 °C in inerter Atmosphäre durchgeführt.

Weiter kann man die erfindungsgemäßen Polysilazane mit gleichhoher keramischer Ausbeute von 70-90 Gew.-% statt in Inertgas auch in $NH_3$-Atmosphäre pyrolysieren. Dabei resultiert ein praktisch kohlenstofffreier, glasklarer, farbloser Werkstoff. Bei der Pyrolyse in $NH_3$ bei 1000 °C oder höher liegt der C-Gehalt unterhalb 0,5 Gew.-%. Das Pyrolyseprodukt besteht je nach Pyrolysetemperatur aus praktisch reinem amorphen Siliziumnitrid (Pyrolyse unterhalb 1200 °C) oder kristallinem Siliziumnitrid (Pyrolyse oberhalb 1250 °C, vorzugsweise oberhalb 1300 °C).

Die Pyrolyse in $NH_3$ läßt sich auf alle nach den oben beschriebenen Formgebungsverfahren hergestellten Formkörper, also aus Polysilazan geformte Körper, Fasern, Beschichtungen und gegossene Teile anwenden. Statt $NH_3$ kann man auch $N_2/H_2$ verwenden.

Die beschriebenen Polysilazane können auch mit anderen keramischen Pulvern wie z.B. $Al_2O_3$, BN, SiC, $Si_3N_4$ etc. vermischt, mit diesen zusammen weiterverarbeitet und schließlich gesintert werden. Es entstehen dabei neuartige Verbundwerkstoffe mit verbesserten mechanischen, thermischen oder chemischen Eigenschaften.

**Beispiel 1**

In einem 1l-Dreihalskolben mit Kühlfinger und Rührvorrichtung löste man unter Stickstoffatmosphäre 32.1 g (= 0.125 Mol) Si,Si'-Dimethyl-N-methyl-tetrachlordisilazanin 600 ml trockenem THF. Man kühlte den Kühlfinger auf -78 °C und die Lösung auf -10 °C. Anschließend wurden 25,5 g (= 1,5 Mol) Ammoniak so zugegeben, daß die Innentemperatur nicht über -5 °C stieg.

Man trennte danach die Ammoniumsalze ab und destillierte das Lösungsmittel bei 20 °C und Unterdruck ab. Dabei wurde der Rückstand fest und schäumte beim Trocknen auf. Man erhielt 14,2 g Polysilazan.

Das $^1$H-NMR in $CDCl_3$ zeigte die $N(CH_3)$-Resonanzen zwischen 2,6 und 2,2 ppm, die NH-Resonanzen zwischen 0,3 und 1,25 ppm und die $Si(CH_3)$-Resonanzen zwischen +0,25 und -0,1 ppm als breite Signalberge. Die Intensitäten von $Si(CH_3)$:NH:$N(CH_3)$ waren 3:1,5:0,14. Dies bedeutet, daß die folgende Verteilung von Monomereinheiten gegeben war:

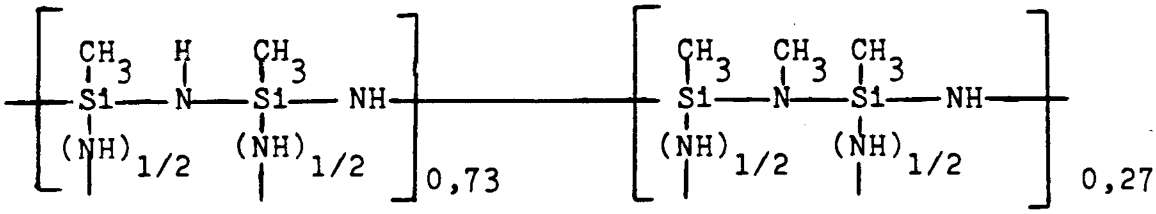

Das Polysilazan besaß eine mittlere Molmasse von 1100 g/mol. Es wurde ein poröser Körper von 10 x 10 x 10 $mm^3$ aus dem Polysilazan bei 3000 bar gepreßt und bei 1000 °C in Stickstoff 1 Stunde pyrolysiert. Die keramische Ausbeute betrug 70 Gew.-%.

| | | | | |
|---|---|---|---|---|
| Elementaranalyse: | N | 28,2 Gew.-% | Si | 38,5 Gew.-% |
| | H | 6,5 Gew.-% | C | 20,6 Gew.-% |

**Beispiel 2**

In einem 1 l-Dreihalskolben mit Flügelrührer und aufgesetztem Trockeneiskühler wurden unter Stickstoffatmosphäre 74,1 g (= 0.26 Mol) Si,Si'-Diethyl-N-methyl-tetrachlordisilazan in 800 ml trockenem THF gelöst. Der Kühlfinger wurde auf -78 °C, die Lösung auf -10 °C gekühlt.

Schließlich wurden 30.9 g (= 1.82 Mol) Ammoniak so zugegeben, daß die Innentemperatur nicht über 0 °C anstieg.

Anschließend wurde vom Ammoniumchlorid abgetrennt und alle flüchtigen Bestandteile bei Unterdruck und 20 °C abdestilliert. Nach vollständigem Abpumpen von THF erhielt man 28,2 g einer weichen Substanz, die in den üblichen aprotischen Lösungsmitteln vollständig löslich war.

Das $^1H$-NMR in $CDCl_3$ zeigte zwei separate Signalberge: zum einen die N-Methyl-Gruppen und zum anderen die Überlagerung der Ethyl- und NH-Signalgruppen mit den Intensitäten 0,6:12.8 Dies führt zur Formel:

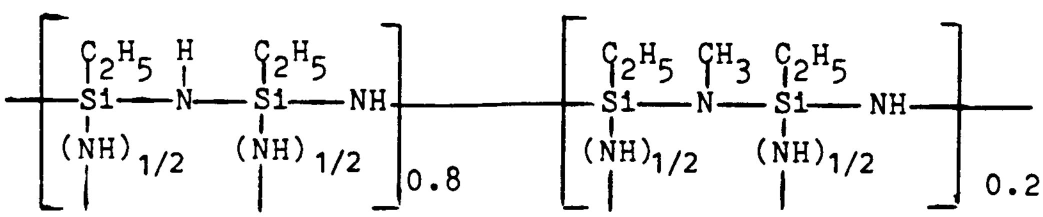

Bei der Pyrolyse in Stickstoff bei 1000 °C wurde eine keramische Ausbeute von 73 Gew.-% gefunden.

**Beispiel 3**

In einem 1 l-Dreihalskolben mit Kühlfinger und Rührvorrichtung löste man unter Stickstoffatmosphäre 32,3 g (= 0,115 Mol) Si,Si'-Divinyl-N-methyl-tetrachlor-disilazan in 500 ml THF. Der Kühlfinger wurde auf -78 °C und die Lösung auf -10 °C gekühlt. Anschließend erfolgte die Zugabe von Ammoniak so, daß die Innentemperatur nicht über -5 °C stieg. Die Gesamtmenge an Ammoniak betrug 23.5 g (= 1.38 Mol).

Nach beendeter Reaktion wurde das ausgefallene Ammoniumchlorid abgetrennt und von Lösungsmittel bei Unterdruck und 20 °C abdestilliert.

Nach vollständigen Abpumpen von THF erhielt man 10,5 g eines Feststoffes, der in allen üblichen aprotischen Lösungsmitteln löslich war.

Das $^1H$-NMR in $CDCl_3$ zeigte separate Signalberge für die Vinyl, die N-Methyl- und die NH-Gruppen mit den Intensitäten 6:0.9:3.4. Dies führte zu der folgenden Verteilung von Monomereinheiten:

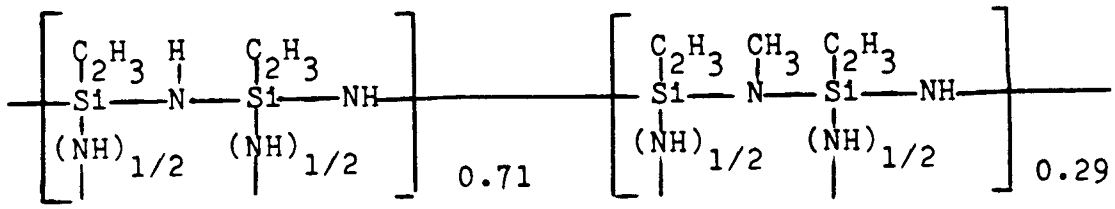

**Beispiel 4**

In einem 1 l Dreihalskolben mit Kühlfinger und Rührvorrichtung löste man unter Schutzgasatmopshäre 35 ml (44,5 g; 0,275 mol) Vinyltrichlorsilan in 600 ml trockenem THF. Der Kühlfinger wurde auf -78 °C (Trockeneis) und die Reaktionslösung auf -10 °C gekühlt. Daraufhin wurden zunächst 12,8 g (0,41 mol) Methylamin und dann 16,4 g (0,96 mol) Ammoniak so eingeleitet, daß die Innentemperatur nicht über 0 °C anstieg.

Die Ammoniumchloride wurden abgesaugt und die flüchtigen Bestandteile des Filtrats bei 20 °C und Unterdruck abdestilliert.

Dadurch erhielt man eine 66 %ige Lösung des Polysilazanes in THF, welche gemäß Anspruch 13 für Überzüge auf $Al_2O_3$ verwendet wurde.

Das $^1$H-NMR-Spektrum in $CDCl_3$ zeigte die folgenden chemischen Verschiebungen:

| | | | |
|---|---|---|---|
| Si-Vinyl: | $\delta$ = 5.5 - 6.2 ppm | Intensität: | 16,3 |
| N-Methyl: | $\delta$ = 2.25 - 2.25 ppm | Intensität: | 3 |
| NH: | $\delta$ = 0.5 - 1.3 ppm | Intensität: | 8,5 |

**Beispiel 5**

In einem 1 l Dreihalskolben mit Kühlfinger und Rührvorrichtung löste man unter Stickstoffatmosphäre ein Gemisch aus 38.1 ml (48,5 g; 0,3 mol) Vinyltrichlorsilan und 35,3 ml (44,8 g; 0,3 mol) Methyltrichlorsilan in 700 ml trockenem THF. Der Kühlfinger wurde auf -78 °C und die Reaktionslösung auf -10 °C gekühlt. Anschließend wurden 27,9 g (0,9 mol) Methylamin eingeleitet. Das gebildete Methylaminhydrochlorid fiel dabei aus der Reaktionslösung aus.

Daraufhin wurden 35,7 g (2,1 mol) Ammoniak eingeleitet. Beim Einleiten von Methylamin und Ammoniak wurde darauf geachtet, daß die Innentemperatur 0 °C nicht überschritt.

Schließlich wurden die ausgefallenen Ammoniumchloride abgesaugt und alle flüchtigen Bestandteile bei Unterdruck und ca. 20 °C abdestilliert. Dabei fiel eine farblose viskose Flüssigkeit an, die noch THF enthielt.

Beim weiteren Trocknen an der Vakuumpumpe wurde ein weißer trockener Feststoff erhalten (34,2 g).

Das $^1$H-NMR in $CDCl_3$ zeigte die folgenden chemischen Verschiebungen:

| | | | |
|---|---|---|---|
| Si-Vinyl: | $\delta$ = 5,5 -6,3 ppm | Intensität: | 10 |
| N-Methyl: | $\delta$ = 2,2 -2,6 ppm | Intensität: | 1,5 |
| NH: | $\delta$ = 0,6 -1,4 ppm | Intensität: | 8 |
| Si-Methyl: | $\delta$ = 0 - 0,5 ppm | Intensität: | 10 |
| Elementaranalyse: N 23,1 Gew.-%, Si 34,4 Gew.-%, | | | |

**Patentansprüche**

1. Verfahren zur Herstellung von polymeren Silazanen, dadurch gekennzeichnet, daß man ein oder mehrere Si,Si'-Diorganyl-N-alkyl-tetrachlor-disilazane der Formel $RSiCl_2$-NR'-$SiCl_2R$, worin R = $C_1$-$C_4$-Alkyl, Vinyl oder Phenyl und R' = $C_1$-$C_4$-Alkyl ist, mit mindestens 6,7 Mol Ammoniak pro Mol Chlordisilazan in einem Lösungsmittel bei Temperaturen von -80 °C bis +70 °C umsetzt.

**2.** Verfahren nach Anspruch 1, dadurch gekennzeichnet, daß R = Methyl, Ethyl, Vinyl oder Phenyl und R′ = Methyl ist.

**3.** Verfahren nach Anspruch 1, dadurch gekennzeichnet, daß R = Ethyl und R′ = Methyl ist.

**4.** Verfahren nach einem der Ansprüche 1 bis 3, dadurch gekennzeichnet, daß man mindestens 7 Mol Ammoniak pro Mol Chlordisilazan verwendet.

**5.** Polymere Silazane der allgemeinen Formel

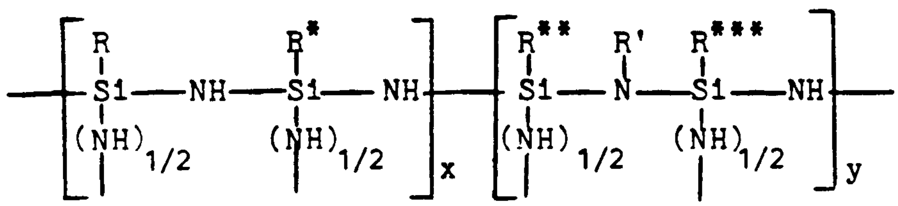

worin R, R*, R** und R*** gleich oder verschieden sein können und R, R*, R**, R*** = $C_1$-$C_4$-Alkyl, Vinyl oder Phenyl und R′ = $C_1$-$C_4$-Alkyl ist und x, y die Molfraktionen der beiden Struktureinheiten bedeuten, wobei x + y = 1 und x = 0,7 - 0,95 ist.

**6.** Polymere Silazane nach Anspruch 5, dadurch gekennzeichnet, daß unabhängig voneinander R, R*, R**, R*** = Methyl, Ethyl, Vinyl oder Phenyl und R′ = Methyl ist.

**7.** Polymere Silazane nach Anspruch 5, dadurch gekennzeichnet, daß R, R*, R**, R*** = Ethyl und R′ = Methyl ist.

**8.** Polymere Silazane nach einem der Ansprüche 5 bis 7, dadurch gekennzeichnet, daß x = 0,85 - 0,95 ist.

**9.** Polymere Silazane, erhältlich nach dem Verfahren gemäß einem der Ansprüche 1 bis 4.

**10.** Verfahren zur Herstellung von Siliziumnitrid enthaltendem keramischen Material, dadurch gekennzeichnet, daß man polymere Silazane gemäß einem der Ansprüche 5 bis 9 in inerter Atmosphäre bei 800 bis 1400 °C pyrolysiert.

**11.** Verfahren nach Anspruch 10, dadurch gekennzeichnet, daß man zur Herstellung von Siliziumnitrid enthaltenden keramischen Fasern die polymeren Silazane zunächst in einem organischen Lösungsmittel löst, aus dieser Lösung Fasern zieht und diese nach Verdampfung des Lösungsmittels pyrolysiert.

**12.** Verfahren nach Anspruch 10, dadurch gekennzeichnet, daß man zur Herstellung von Siliziumnitrid enthaltenden keramischen Formkörpern die pulverförmigen polymeren Silazane vor der Pyrolyse zu Formkörpern preßt.

**13.** Verfahren nach Anspruch 10, dadurch gekennzeichnet, daß man zur Herstellung von Siliziumnitrid enthaltenden keramischen Beschichtungen die polymeren Silazane zunächst in einem organischen Lösungsmittel löst, mit dieser Lösung die Beschichtung vornimmt und diese nach Verdampfung des Lösungsmittels pyrolysiert.

**14.** Verfahren zur Herstellung von Siliziumnitrid enthaltenden keramischen Fasern, dadurch gekennzeichnet, daß man polymere Silazane gemäß Anspruch 7 schmilzt, aus der Schmelze bei 60 bis 100 °C Fasern zieht, diese mit Luft unschmelzbar macht und dann bei 800 bis 1400 °C in inerter Atmosphäre pyrolysiert.

**15.** Verfahren zur Herstellung von Siliziumnitrid enthaltenden keramischen Formkörpern, dadurch gekennzeichnet, daß man polymere Silazane gemäß Anspruch 7 schmilzt, die Schmelze durch Gießen, Spritzgießen oder Extrudieren zu Formkörpern verarbeitet, diese mit Luft oder $NH_3$ unschmelzbar

macht und dann bei 800 bis 1400 ° C in inerter Atmosphäre pyrolysiert.

**16.** Verfahren nach einem der Ansprüche 10 bis 15, dadurch gekennzeichnet, daß man statt in inerter Atmosphäre in $NH_3$- oder $N_2/H_2$-Atmosphäre pyrolysiert.

**17.** Verfahren nach einem der Ansprüche 10 bis 16, dadurch gekennzeichnet, daß man bei 800 - 1200 ° C pyrolysiert.

**18.** Verfahren nach einem der Ansprüche 10 bis 16, dadurch gekennzeichnet, daß man bei 1200 - 1400 ° C pyrolysiert.

**Claims**

**1.** A process for the preparation of a polymeric silazane, which comprises reacting one or more Si, Si'-diorganyl-N-alkyl-tetrachloro-disilazanes of the formula $RSiCl_2$-NR'-$SiCl_2R$, in which R is $C_1$-$C_4$-alkyl, vinyl or phenyl and R' is $C_1$-$C_4$-alkyl, with at least 6.7 mol of ammonia per mol of chlorodisilazane in a solvent at temperatures from -80 ° C to +70 ° C.

**2.** The process as claimed in claim 1, wherein R is methyl, ethyl, vinyl or phenyl and R' is methyl.

**3.** The process as claimed in claim 1, wherein R is ethyl and R' is methyl.

**4.** The process as claimed in any one of claims 1 to 3, wherein at least 7 mol of ammonia are used per mol of chlorodisilazane.

**5.** A polymeric silazane of the formula

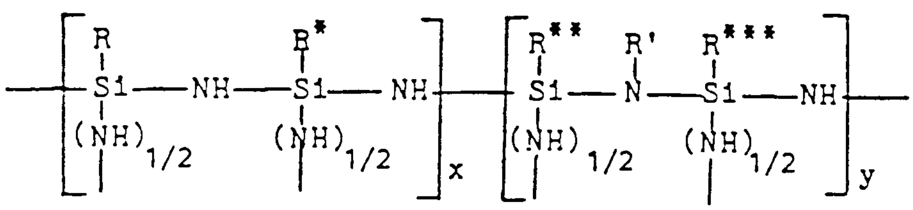

in which R, R*, R** and R*** can be identical or different and R, R*, R** and R*** are $C_1$-$C_4$-alkyl, vinyl or phenyl, R' is $C_1$-$C_4$-alkyl and x and y denote the molar fractions of the two structural units, x + y being 1 and x being 0.7 - 0.95.

**6.** A polymeric silazane as claimed in claim 5, wherein, independently of one another, R, R*, R** and R*** are methyl, ethyl, vinyl or phenyl and R' is methyl.

**7.** A polymeric silazane as claimed in claim 5, wherein R, R*, R** and R*** are ethyl and R' is methyl.

**8.** A polymeric silazane as claimed in any one of claims 5 to 7, wherein x is 0.85 - 0.95.

**9.** A polymeric silazane, obtainable by the process as claimed in any one of claims 1 to 4.

**10.** A process for the preparation of ceramic material containing silicon nitride, which comprises pyrolyzing a polymeric silazane as claimed in any one of claims 5 to 9 in an inert atmosphere at 800 to 1400 ° C.

**11.** The process as claimed in claim 10, wherein, to produce ceramic fibers containing silicon nitride, the polymeric silazane is first dissolved in an organic solvent, fibers are drawn from this solution and these are pyrolyzed after the solvent has been evaporated off.

**12.** The process as claimed in claim 10, wherein, to produce a ceramic shaped article containing silicon nitride, the pulverulent polymeric silazane is pressed to a shaped article before the pyrolysis.

**13.** The process as claimed in claim 10, wherein, to produce a ceramic coating containing silicon nitride, the polymeric silazane is first dissolved in an organic solvent, the coating operation is carried out with this solution and the coating is pyrolyzed, after the solvent has been evaporated off.

**14.** A process for the production of ceramic fibers containing silicon nitride, which comprises melting a polymeric silazane as claimed in claim 7, drawing fibers from the melt at 60 to 100 °C, rendering these non-fusible with air and then pyrolyzing the product at 800 to 1400 °C in an inert atmosphere.

**15.** A process for the production of a ceramic shaped article containing silicon nitride, which comprises melting a polymeric silazane as claimed in claim 7, processing the melt by casting, injection-molding or extrusion to give a shaped article, rendering this non-fusible with air or $NH_3$ and then pyrolyzing the product at 800 to 1400 °C in an inert atmosphere.

**16.** The process as claimed in any one of claims 10 to 15, wherein the pyrolysis is carried out in an $NH_3$ or $N_2/H_2$ atmosphere instead of in an inert atmosphere.

**17.** The process as claimed in any one of claims 10 to 16, wherein the pyrolysis is carried out at 800 - 1200 °C.

**18.** The process as claimed in any one of claims 10 to 16, wherein the pyrolysis is carried out at 1200 - 1400 °C.

**Revendications**

**1.** Procédé pour préparer des silazanes polymères, caractérisé en ce qu'on fait réagir un ou plusieurs Si,Si'-diorganyl-N-alkyl-tétrachloro-disilazanes de formule $RSiCl_2$-NR'-$SiCl_2R$, où R est un radical alkyle en $C_1$-$C_4$, vinyle ou phényle et R' est un radical alkyle en $C_1$-$C_4$, avec au moins 6,7 moles d'ammoniac par mole de chorodisilazane, dans un solvant à des températures de -80 à +70 °C.

**2.** Procédé selon la revendication 1, caractérisé en ce que R est le radical méthyle, éthyle, vinyle ou phényle, et R' est le radical méthyle.

**3.** Procédé selon la revendication 1, caractérisé en ce que R est le radical éthyle et R' le radical méthyle.

**4.** Procédé selon l'une des revendications 1 à 3, caractérisé en ce qu'on utilise au moins 7 moles d'ammoniac par mole de chlorodisilazane.

**5.** Silazanes polymères de formule générale

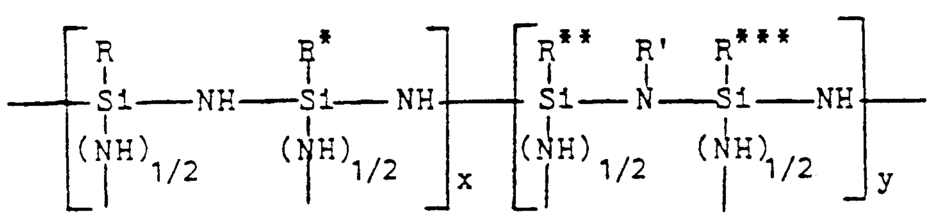

dans laquelle R, $R^*$, $R^{**}$ et $R^{***}$ peuvent être identiques ou différents, et R, $R^*$, $R^{**}$ et $R^{***}$ représentent chacun un radical alkyle en $C_1$-$C_4$, vinyle ou phényle, et R' est un radical alkyle en $C_1$-$C_4$, et x et y représentent les fractions molaires des deux motifs structuraux, avec $x + y = 1$ et $x = 0,7$-$0,95$.

**6.** Silazanes polymères selon la revendication 5, caractérisés en ce que les radicaux R, $R^*$, $R^{**}$ et $R^{***}$ représentent chacun, indépendamment des autres, un radical méthyle, éthyle, vinyle ou phényle, et R' est un radical méthyle.

**7.** Silazanes polymères selon la revendication 5, caractérisés en ce que R, $R^*$, $R^{**}$ et $R^{***}$ sont chacun le radical éthyle, et R' est le radical méthyle.

**8.** Silazanes polymères selon l'une des revendications 5 à 7, caractérisés en ce que x est compris entre 0,85 et 0,95.

**9.** Silazanes polymères pouvant être obtenus par le procédé selon l'une des revendications 1 à 4.

**10.** Procédé pour préparer un matériau céramique contenant du nitrure de silicium, caractérisé en ce qu'on pyrolyse des silazanes inertes selon l'une des revendications 5 à 9 dans une atmosphère inerte à une température de 800 à 1400 ° C.

**11.** Procédé selon la revendication 10, caractérisé en ce que, pour préparer des fibres céramiques contenant du nitrure de silicium, on dissout d'abord les silazanes polymères dans un solvant organique, on tire des fibres de cette solution et on pyrolyse ces dernières après évaporation du solvant.

**12.** Procédé selon la revendication 10, caractérisé en ce que, pour préparer des objets moulés céramiques contenant du nitrure de silicium, on comprime pour obtenir des objets moulés, avant la pyrolyse, les silazanes polymères en poudre.

**13.** Procédé selon la revendication 10, caractérisé en ce que, pour préparer des revêtements céramiques contenant du nitrure de silicium, on dissout d'abord les silazanes polymères dans un solvant organique, on procède au revêtement avec cette solution, et on pyrolyse le revêtement après évaporation du solvant.

**14.** Procédé pour préparer des fibres céramiques contenant du nitrure de silicium, caractérisé en ce qu'on fait fondre des silazanes polymères selon la revendication 7, on tire des fibres à partir de la masse fondue à une température de 60 à 100 ° C, on les rend infusibles à l'air, puis on pyrolyse dans une atmosphère inerte à une température de 800 à 1400 ° C.

**15.** Procédé pour préparer des objets moulés céramiques contenant du nitrure de silicium, caractérisé en ce qu'on fait fondre des silazanes polymères selon la revendication 7, on transforme en objets moulés la masse fondue par coulée, moulage par injection ou extrusion, on les rend infusibles à l'aide d'air ou de $NH_3$, puis on pyrolyse à une température de 800 à 1400 ° C dans une atmosphère inerte.

**16.** Procédé selon l'une des revendications 10 à 15, caractérisé en ce que la pyrolyse est effectuée non pas dans une atmosphère inerte, mais dans une atmosphère de $NH_3$ ou de $N_2/H_2$.

**17.** Procédé selon l'une des revendications 10 à 16, caractérisé en ce que la pyrolyse est mise en oeuvre à une température de 800-1200 ° C.

**18.** Procédé selon l'une des revendications 10 à 16, caractérisé en ce que la pyrolyse est mise en oeuvre à une température de 1200-1400 ° C.